# EUROPÄISCHE PATENTSCHRIFT

(11) **EP 2 792 426 B1**
(45) Veröffentlichungstag und Bekanntmachung des Hinweises auf die Patenterteilung: **15.08.2018**
(21) Anmeldenummer: 14155381.8
(22) Anmeldetag: 17.02.2014
(51) Int. Cl.: B08B 9/093, B60P 3/22, B65D 88/54, B65D 88/56, B65D 88/72

(54) **Tankkesselfahrzeug mit integriertem Tankwaschkopf und Verfahren zum Entleeren des Tankkessels eines Tankkesselfahrzeuges**
Tanker vehicle with integrated tank washing head and method for emptying the tank of a tanker vehicle
Véhicule-citerne avec tête de lavage de citerne intégrée et procédé de vidange de la citerne d'un véhicule-citerne

(30) Priorität: 19.04.2013 DE 102013207167
(43) Veröffentlichungstag der Anmeldung: 22.10.2014
(73) Patentinhaber: Buchen Umweltservice GmbH, 50735 Köln (DE)
(72) Erfinder: Unger, Roland, 53332 Bornheim-Sechtem (DE)
(74) Vertreter: Patentanwälte Bauer Vorberg Kayser

(56) Entgegenhaltungen:
- EP-A1- 0 262 261
- EP-A1- 1 437 184
- EP-A2- 1 190 781
- EP-A2- 2 478 973
- FR-A1- 2 263 037
- GB-A- 1 029 909
- US-A- 5 211 337
- US-A- 5 876 512

## Beschreibung

Die Erfindung betrifft ein Tankkesselfahrzeug nach dem Oberbegriff des Anspruchs1 und auf ein Verfahren zum Entleeren des Tankkessels eines solchen Tankkesselfahrzeugs nach dem Oberbegriff des Anspruchs 8. Ein derartiges Tankkesselfahrzeug und ein derartiges Verfahren sind aus der EP 1 190 781 A2 vorbekannt.
Derartige Tankkesselfahrzeuge mit einem darauf befindlichen Tankkessel werden eingesetzt, um vor Ort Verschmutzungen und Rückstände wie Chemikalien, Abwasser, Schlamm, etc. in dem Tankkessel aufzunehmen und dann abzutransportieren. Beispielsweise können so Behälter, Tanks, Abwasserkanäle oder -gruben geleert werden. Insbesondere bei sogenannten Saugkesselwagen kann ein Produkt dazu beispielsweise mittels einer Vakuumpumpe durch einen Schlauch in den Tankkessel gesaugt werden. Zum Entleeren des Tankkessels an einem anderen Ort kann dann vorgesehen sein, dass der Tankkessel kippbar ausgeführt ist. Die hintere Wand des Kessels kann eine Klappe aufweisen, die nach oben schwenkbar ist, so dass das zuvor aufgenommene Produkt durch Kippen des Tankkessels über die offene Klappe abgelassen werden kann.
Darüber hinaus ist es bekannt, derartige Tankkesselfahrzeuge mit einer Schnecke oder einem Ausschubkolben zu versehen, mit welcher das Produkt ebenfalls aus dem Tankkessel befördert werden kann. Es sind auch Tankkesselfahrzeuge bekannt, bei denen das aufgenommene Produkt mittels einer Pumpe durch einen Auslass herausgedrückt werden kann.
Dabei wird das Produkt zur weiteren Behandlung bzw. Entsorgung typischerweise in eine Grube oder einen Lagertank im Boden entleert. Das Produkt fließt also hinten aus der Klappe heraus, was je nach Art des aufgenommenen Produktes zu einer erheblichen Geruchsbelästigung für Personen führt, die in der Nähe des Fahrzeugs stehen. Ferner muss das Fahrzeug direkt zu dem Bodentank/Lagerbehälter gefahren werden, über dem das Produkt abgelassen werden soll. Dies kann je nach den baulichen Gegebenheiten vor Ort jedoch schwierig sein.

Beim Einsatz einer Pumpe zum Abpumpen des Produkts aus dem Tankkessel kann eine gewisse Distanz zwischen dem Fahrzeug und einem Lagertank durch einen angeschlossenen Schlauch überwunden werden. Dies ist vorteilhaft, aber insbesondere beim Einsatz von Vakuumpumpen für diesen Zweck sind dem erreichbaren Durchsatz Grenzen gesetzt.

Unabhängig von der Art der Entleerung eines Tankkessels muss dieser anschließend auch von innen gereinigt werden. Üblicherweise steigt dazu eine Person von hinten durch die offene Luke in den Tankkessel und reinigt diesen mittels eines mobilen Hochdruckreinigers. Dabei fließen die letzten Reste des zuvor aufgenommenen Produktes zusammen mit dem Wasser hinten aus der Öffnung heraus und müssen ebenfalls geeignet gehandhabt werden.

Aus dem Bereich der Reinigung von geschlossenen Behältern ist es ferner bekannt, mobile Tankwaschköpfe beispielsweise von oben durch ein Mannloch in einen Kessel einzuführen. Ein solcher Waschkopf ist üblicherweise an einer Lanze angebracht, so dass er durch das Mannloch weit in den Kessel geführt werden kann. Um die Innenwände des Kessels möglichst vollständig reinigen zu können, kann es sich um einen rotierenden Waschkopf handeln und/oder der Waschkopf ist an einem beweglichen Arm angebracht, der in verschiedene Richtungen geschwenkt werden kann.

Beispielsweise offenbart die Patentschrift DE 100 46 049 C1 einen Spritzwaschkopf zur Reinigung insbesondere von chemotechnischen Behältern, bei dem der Spritzwaschkopf durch eine verschließbare Behälteröffnung geführt wird. Der Spritzwaschkopf befindet sich dabei an einem Schwenkarm, der durch Verstellantriebe in einer Vertikallage durch die Behälteröffnung ein- und ausschiebbar und innerhalb des Behälters um eine Horizontalachse in eine Querlage klappbar, sowie um die Hochachse drehbar ist. Würde man einen solchen Spritzwaschkopf zur Reinigung des Tankkessels eines Tankkesselwagens einsetzen, müsste eine Person hoch auf den Tankkessel steigen, um den Waschkopf von oben in eine Behälteröffnung einzuführen. Dies ist aufwendig und bringt eine erhebliche Unfallgefahr mit sich.

Die beschriebenen Vorgehensweisen stellen somit keine zufriedenstellende Lösung bereit, mit welcher der Tankkessel eines Tankkesselfahrzeugs schnell und sauber geleert werden kann. Aufgabe der Erfindung ist es daher, eine verbesserte Möglichkeit zur Entleerung und Reinigung des Tankkessels eines solchen Tankkesselfahrzeugs bereitzustellen und den Tankwaschkopf besser vor Schäden durch das Produkt im Kessel zu schützen und Produktreste von diesem fernzuhalten bzw. zu entfernen.
Erfindungsgemäß wird diese Aufgabe durch ein Tankkesselfahrzeug gemäß dem unabhängigen Anspruch 1 gelöst. Vorteilhafte Weiterbildungen dieses Tankkesselfahrzeugs ergeben sich aus den Unteransprüchen 2-7. Ferner wird die Aufgabe durch ein Verfahren zum Entleeren eines Tankkesselfahrzeugs gemäß dem unabhängigen Anspruch 8 gelöst. Vorteilhafte Weiterbildungen dieses Verfahrens ergeben sich aus den Ansprüchen 9-14. Das erfindungsgemäße Tankkesselfahrzeug umfasst einen Tankkessel, welcher wenigstens einen Auslass zum Entleeren eines Produktes aus dem Tankkessel aufweist. Dabei ist im Tankkessel wenigstens ein Tankwaschkopf installiert, über den eine Spülflüssigkeit unter Druck in den Tankkessel einbringbar ist. Der Tankwaschkopf ist somit ein fester Bestandteil des Tankkesselfahrzeugs und in den Tankkessel integriert, so dass er jederzeit vor Ort eingesetzt werden kann und nicht nur bei Bedarf beispielsweise in ein Mannloch eingeführt wird. Der Tankwaschkopf muss dazu aber nicht zwingend unlösbar mit dem Tankkessel verbunden sein, wie es beispielsweise durch eine Schweißverbindung realisiert werden kann. Vielmehr kann er auch lösbar im Tankkessel montiert sein. Dies kann beispielsweise über Schraub-, Steck- und/oder Rastverbindungen erfolgen.

Das Tankkesselfahrzeug bietet so die Möglichkeit, Spülflüssigkeit unter Druck an einer bestimmten Stelle in den Tankkessel einzubringen, was für verschiedene Zwecke genutzt werden kann. Erstens kann der Tankwaschkopf nach Entleerung eines Produktes aus dem Tankkessel in Betrieb genommen werden, um den Tankkessel von innen zu reinigen, ohne dass eine Person dazu in den Tankkessel einsteigen muss. Gegenüber einem nur temporär in ein Mannloch eingebrachtem Tankwaschkopf an einer Lanze hat der fest installierte Tankwaschkopf dabei den Vorteil, dass eine Person wie beispielsweise der Fahrer des Fahrzeugs nicht auf den Tankkessel steigen muss, um einen Tankwaschkopf in Stellung zu bringen oder sogar während des Reinigungsvorgangs festzuhalten. Er kann einfach einen Schalter am Fahrzeug betätigen, welcher den automatischen Reinigungsvorgang startet, ohne dass die Person weiter tätig werden muss. Sie kann das Fahrzeug während des Reinigungsvorgangs auch verlassen oder andere Tätigkeiten am Fahrzeug durchführen. Dies führt zu einer Zeitersparnis und einer erheblichen Erhöhung der Effektivität.

Ferner muss keine Person in den Tankkessel einsteigen, was ebenfalls eine erhebliche Arbeitserleichterung darstellt. Die Höhe eines Tankwagens ist begrenzt, so dass eine Person oftmals nicht im Kessel stehen kann, sondern gebückt oder auf Knien arbeiten muss. Auch ist bei der Reinigung keine Person mehr herumspritzenden Resten eines zuvor aufgenommenen Produktes ausgesetzt.

Bei der verwendeten Spülflüssigkeit handelt es sich vorzugsweise um Wasser. Die Spülflüssigkeit kann dann mit den abgespülten Produktresten über Öffnen einer hinteren Klappe am Tankkessel abgelassen werden. Im Tankkessel kann jedoch auch ein verschließbarer Auslass vorhanden sein, über den die Spülflüssigkeit abgelassen werden kann. Hierbei können auch Pumpen und/oder Kompressoren zum Einsatz kommen, um die Spülflüssigkeit schnell und kontrolliert abzuführen.

Bei dem Tankwaschkopf handelt es sich um einen Rotationswaschkopf. Insbesondere hat sich ein selbst-drehender Rotationswaschkopf als vorteilhaft erwiesen, der bei Zuführung einer Spülflüssigkeit unter hohem Druck um wenigstens eine Achse rotiert. Hierdurch kann der Strahl einer Spülflüssigkeit unter Druck innerhalb des gesamten Tankkessels verteilt werden, um so die Innenfläche des Tankkessels vollständig mit Spülflüssigkeit besprühen zu können. Vorzugsweise rotiert wenigstens eine Düse des Tankwaschkopfes dabei um wenigstens zwei Achsen. Beispielsweise können ein oder mehrere Düsen um eine vertikale und eine horizontale Achse rotieren.

In einer Ausführungsform der Erfindung ist der Tankkessel kippbar auf dem Tankkesselfahrzeug angebracht. Dies hat den Vorteil, dass nicht nur ein zuvor darin aufgenommenes Produkt durch Kippen des Kessels über eine Luke oder einen Auslass abgelassen werden kann. Vielmehr kann auf diesem Wege auch die Spülflüssigkeit zusammen mit den Produktresten durch Kippen abgelassen werden.

In einer weiteren Ausführungsform der Erfindung ist der Tankwaschkopf an der Oberseite des Tankkessels in dessen Wandung integriert. Der Tankwaschkopf strahlt also von oben Spülflüssigkeit in den Tankkessel, wobei er vorzugsweise in den Innenraum des Kessels hineinragt, um so durch Rotation der Düse(n) eine möglichst vollständige Besprühung und damit Reinigung der Innenwände zu erreichen. Der Tankwaschkopf ragt aber zweckmäßigerweise nur so weit in den Kessel hinein, dass er bei gefülltem Tankkessel nicht in das aufgenommen Produkt eintaucht. So ist er besser gegen Beschädigung durch das Produkt geschützt, denn Produkte wie aggressive Chemikalien oder Abwässer mit Feststoffen könnten insbesondere die Lagerung eines Rotationswaschkopfes schädigen.

Um den Tankwaschkopf besser vor Schäden durch das Produkt im Kessel zu schützen, ist im Umfeld des Tankwaschkopfes wenigstens ein Reflektorelement zur Beeinflussung der Ausbreitung der aus dem Tankwaschkopf austretenden Spülflüssigkeit ausgebildet. Durch dieses Reflektorelement wird die Spülflüssigkeit insbesondere so geleitet, dass sie zumindest teilweise auch den Tankwaschkopf umspült. So ist die Spülflüssigkeit nicht nur auf die Innenwände gerichtet, sondern umspült gleichzeitig auch den Tankwaschkopf, um Produktreste von diesem fernzuhalten bzw. zu entfernen.

Als besonders vorteilhaft hat sich zu diesem Zweck ein Kragen erwiesen, der so um den Tankwaschkopf herum angeordnet ist, dass ein von dem Tankwaschkopf ausgehender Strahl an Spülflüssigkeit wenigstens temporär zwischen Tankwaschkopf und dem Kragen hindurchtritt. Wird bei einem an der Oberseite des Tankkessels angebrachten Waschkopf dieser von einem solchen Kragen umgeben, sprüht die Spülflüssigkeit bei einer entsprechenden Rotation wenigstens einer Düse immer wieder genau in den Zwischenraum zwischen Tankwaschkopf und Kragen. Dort wird die Spülflüssigkeit so reflektiert, umgelenkt und gesammelt, dass sie am Tankwaschkopf und an der Innenwand des Kragens herabläuft. So wird der Tankwaschkopf permanent von herablaufender Spülflüssigkeit umspült, wodurch Produktreste nach unten weggespült werden.

Ohne ein solches Reflektorelement würde die Spülflüssigkeit hingegen bei einer Rotation wenigstens einer Düse nur direkt gegen die Innenwandung sprühen und der Strahl würde dort zerstäubt und verteilt. Dabei würden geringere Mengen an Spülflüssigkeit am Tankwaschkopf herablaufen, die nicht ausreichen könnten, um eine ausreichende Umspülung des Tankwaschkopfes mit Spülflüssigkeit zu gewährleisten.

In einer Ausführungsform der Erfindung weist das Tankkesselfahrzeug ferner Mittel zum Entleeren eines Produktes aus dem Tankkessel über den Auslass unter Druck auf. Hierbei kann es sich beispielsweise um einen Ausschubkolben handeln, aber vorzugsweise ist hierzu ein Kompressor vorgesehen. Über diesen Kompressor kann Luft unter Druck in den Tankkessel eingebracht werden. Der Kompressor steht also in Verbindung mit dem Innenraum des Kessels und ist vorzugsweise in einem Bereich angebracht, welcher dem Auslass zum Entleeren des Produktes gegenüber liegt. Da das Produkt typischerweise hinten am Tankkessel entleert wird, ist der Kompressor daher vorzugsweise im vorderen Bereich angebracht bzw. hat dort einen Zugang zum Tankkessel.

Der Kompressor kann Umgebungsluft ansaugen und unter Drücken in der Größenordnung von bis zu 3 bar, vorzugsweise bei 2-2,5 bar, in den Tankkessel einbringen. Auf diese Weise kann beispielsweise ein zuvor aufgenommenes Produkt über einen Auslass bei 2 bar Überdruck aus dem Kessel gedrückt werden. Das Gleiche gilt für Spülflüssigkeit zusammen mit Produktresten, so dass ein Entleerungs- und/oder Reinigungsvorgang durch Verwendung des Kompressors gegenüber Lösungen, bei denen Stoffe lediglich durch ein Kippen des Tankkessels abfließen, erheblich beschleunigt werden kann.

Ferner kann der Kompressor dazu genutzt werden, um ein Produkt und/oder eine Spülflüssigkeit über einen Schlauch zu einem von dem Fahrzeug entfernt angeordneten Ort zu fördern. An einen Auslass am Tankkessel kann somit ein Schlauch angeschlossen werden, über den das Produkt unter Druck über Entfernungen in der Größenordnung von bis zu 20m transportiert und dort beispielsweise in einen Lagertank abgelassen werden kann. Da am Fahrzeug kein Produkt austritt, kann der Vorgang hierdurch sauber und geruchsarm durchgeführt werden.

Die Spülflüssigkeit eines Tankwaschkopfes kann jedoch nicht nur nach der bereits erfolgten Entleerung eines Produktes aus dem Tankkessel zur anschließenden Reinigung des Kessels genutzt werden. Vielmehr kann sie auch schon während des Entleerungsvorgangs eingesetzt werden, um das Produkt insbesondere zu verflüssigen und Feststoffe aufzuwirbeln oder sogar zu zerkleinern, d.h. ein Produkt gangbar oder zumindest gangbarer zu machen. Von der Erfindung umfasst ist daher auch ein Verfahren zum Entleeren des Tankkessels eines Tankkesselfahrzeugs, wobei bei dem Entleerungsvorgang ein zuvor in den Tankkessel aufgenommenes Produkt über wenigstens einen Auslass aus dem Tankkessel entleert wird. Erfindungsgemäß wird während dieses Entleerungsvorgangs wenigstens temporär eine Spülflüssigkeit über einen Tankwaschkopf unter Druck in den Tankkessel eingebracht. Wird die Spülflüssigkeit sehr spät innerhalb des Entleerungsvorgangs eingesetzt, werden unter Umständen nur noch die letzten Reste heraus gespült, während die Spülflüssigkeit bei einem Einsatz bereits sehr früh im Entleerungsvorgang auch zur Verbesserung der Entleerung insgesamt beitragen kann.

Vorzugsweise wird dabei ein Tankkesselfahrzeug mit fest installiertem Tankwaschkopf gemäß einer der beschriebenen Ausführungsformen eingesetzt, aber es könnte auch ein mobiler Tankwaschkopf verwendet werden, der lediglich für den Entleerungsvorgang in dem Tankkessel installiert bzw. in diesen eingebracht wird. Die in dieser Anmeldung beschriebenen Verfahren sind daher nicht auf die Verwendung bei Tankkesselfahrzeugen mit fest installiertem Tankwaschkopf beschränkt, sondern können auch mit Tankwaschköpfen durchgeführt werden, die nur temporär in den Tankkessel eingebracht werden.

Durch die Einbringung einer Spülflüssigkeit wie Wasser in den Tankkessel verflüssigt sich das in dem Tankkessel aufgenommene Produkt für die Entleerung, was verschiedene Vorteile mit sich bringt. Beispielsweise wird das Produkt aufgewirbelt, so dass es den Auslass nicht verstopfen kann, sondern stets in Bewegung bleibt und so schneller über den Auslass entleert werden kann. Dies ist insbesondere bei Produkten mit darin enthaltenen Feststoffen bedeutsam, da diese so nicht so schnell den Auslass verstopfen. Ferner können durch das Einbringen der Spülflüssigkeit Ansammlungen und Klumpen von Feststoffen sogar aufgelöst werden, wodurch sie ebenfalls problemloser durch einen Auslass entleert werden können.

Somit kann für die Entleerung eines Produktes aus dem Tankkessel ein Auslassstutzen mit relativ kleinem Durchmesser in der Größenordnung von beispielsweise bis zu 300mm gewählt werden, durch den das Produkt insbesondere herausgedrückt werden kann. Hierzu kann der bereits beschriebene Kompressor eingesetzt werden. Beim Entleerungsvorgang können somit wenigstens temporär Mittel eingesetzt werden, mit denen das Produkt unter Druck aus dem Tankkessel durch den Auslass gedrückt wird.

Der Auslassstutzen kann an einen Schlauch angeschlossen sein, mit dem das Produkt über eine bestimmte Entfernung zu einem Lagerbehälter gefördert werden kann. So ist kein Ablassen über eine geöffnete Luke mehr erforderlich, sondern das Produkt kann kontrolliert entleert und zu einem Zielort gefördert werden. Dabei kommt es am Fahrzeug zu keinen Verschmutzungen oder Geruchsemissionen durch das Produkt.

Die Spülflüssigkeit kann bereits am Anfang des Entleerungsvorgangs über den Tankwaschkopf zugeführt werden. In einer Ausführungsform der Erfindung ist jedoch vorgesehen, dass die Spülflüssigkeit nicht sofort bei Beginn des Entleerungsvorgangs zugeführt wird, sondern erst nach Ablassen einer ersten Menge des Produktes. Beispielsweise kann erst ein flüssigerer Anteil des Produktes abgelassen werden, um dann ab einem bestimmten Zeitpunkt am Boden verbleibende Feststoffe mittels der Spülflüssigkeit aufzuwirbeln und/oder aufzulösen, um sie so für die weitere Entleerung in Bewegung zu bringen.

Ferner kann das Verfahren vorsehen, dass der Tankkessel beim Entleerungsvorgang wenigstens temporär gegenüber dem Tankkesselfahrzeug gekippt wird. So kann das Produkt über die Schwerkraft abgelassen werden, ohne dass der Kompressor zum Einsatz kommt. Als Kombination verschiedener Maßnahmen kann der Tankkessel jedoch auch beim Entleerungsvorgang gegenüber dem Tankkesselfahrzeug gekippt werden, während gleichzeitig Spülflüssigkeit unter Druck über den Tankwaschkopf in den Tankkessel eingebracht und Mittel eingesetzt werden, mit denen das Produkt unter Druck über den Auslass aus dem Tankkessel entleert wird. Auf diese Weise können die Vorteile der einzelnen Maßnahmen gemeinsam genutzt werden.

Es kann jedoch auch vorgesehen sein, dass der Tankkessel beim Entleerungsvorgang gegenüber dem Tankkesselfahrzeug gekippt wird, während gleichzeitig Mittel eingesetzt werden, mit denen das Produkt unter Druck über den Auslass aus dem Tankkessel entleert wird. Doch erst ab einem bestimmten Zeitpunkt während des Entleerungsvorgangs wird zusätzlich Spülflüssigkeit unter Druck über den Tankwaschkopf in den Tankkessel eingebracht. Diese Vorgehensweise kann erneut dazu genutzt werden, erst den flüssigeren Anteil des Produktes schnell und sauber durch einen Auslass zu entleeren. Bevor Feststoffe den Auslass verstopfen können, wird Spülflüssigkeit eingeführt, um die Feststoffe aufzuwirbeln/aufzulösen und den Entleerungsvorgang so problemlos weiterführen zu können.

Dabei kann die geeignete Verfahrensführung auf Erfahrungswerten für die jeweils zu entsorgenden Produkte beruhen. Ein Fahrer kann so das Kippen des Tankkessels, das Starten des Kompressors und/oder die Zufuhr von Spülflüssigkeit über den Tankwaschkopf zu Zeitpunkten auslösen, an denen es erfahrungsgemäß günstig ist, um das Produkt so schnell und problemlos wie möglich aus dem Kessel zu entleeren. In der Steuerung des Fahrzeugs können jedoch auch vorprogrammierte Abläufe hinterlegt sein, welche die genannten Maßnahmen einzelnen oder in Kombination automatisch durchführen. Ferner können Sensoren eingesetzt werden, um einzelne Maßnahmen anzusteuern. Insbesondere kann sich ein Sensor an einem Auslassstutzen befinden, um dort den Feststoffgehalt des abfließenden Produktes zu messen. Sobald ein bestimmter Feststoffgehalt überschritten wird, kann dies beispielsweise als Signal dafür verwendet werden, Spülflüssigkeit zuzuführen, um ein Verstopfen des Auslassstutzens zu verhindern. Ferner könnte der Durchfluss am Auslassstutzen gemessen werden, so dass bestimmte Maßnahmen nur oberhalb oder unterhalb eines vorgegebenen Durchflusses durchgeführt werden.

Weitere Vorteile, Besonderheiten und zweckmäßige Weiterbildungen der Erfindung ergeben sich aus den Unteransprüchen und der nachfolgenden Darstellung eines bevorzugten Ausführungsbeispiels anhand der Abbildungen.

Von den Abbildungen zeigt:
- Fig. 1: eine schematische Darstellung des Ausführungsbeispiels des erfindungsgemäßen Tankkesselfahrzeugs;
- Fig. 2: das Tankkesselfahrzeug gemäß Fig. 1 mit gekipptem Tankkessel beim Entleerungsvorgang;
- Fig. 3: das Tankkesselfahrzeug gemäß Fig. 1 mit gekipptem Tankkessel und Einsatz eines Tankwaschkopfes beim Entleerungsvorgang;
- Fig. 4a: einen Tankwaschkopf an der Wandung des Tankkessels in einer ersten Seitenansicht;
- Fig. 4b: den Tankwaschkopf an der Wandung des Tankkessels in einer zweiten Seitenansicht; und
- Fig. 4c: eine Untersicht auf den Tankwaschkopf gemäß Fig. 4a.

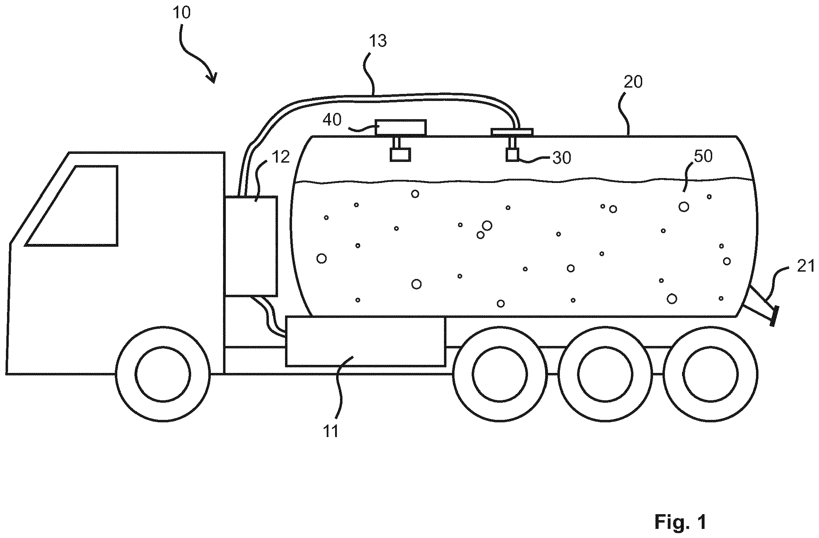

In der lediglich schematischen Darstellung der Fig. 1 ist ein Ausführungsbeispiel des erfindungsgemäßen Tankkesselfahrzeugs 10 gezeigt. Das Fahrzeug weist statt einer Ladefläche einen Tankkessel 20 auf, in den ein Produkt 50 wie beispielsweise Chemikalien, Rückstände aus Gruben oder Tanks, Schlamm und/oder Abwässer aufgenommen werden können. Die Größe des Tankkessels 20 liegt üblicherweise in der Größenordnung von 14-20 m³. Das aufgenommene Produkt 50 kann mit dem Fahrzeug 10 abtransportiert und an einem anderen Ort entleert werden. Dies kann beispielsweise über einen Auslassstutzen 21 und/oder eine hintere Klappe am Kessel 20 erfolgen, die hierfür geöffnet werden kann. Eine solche Klappe kann auch als Auslass im Sinne dieser Erfindung bezeichnet werden.

Die Aufnahme des Produkts 50 in den Tankkessel 20 erfolgt beispielsweise durch Ansaugen des Produkts mittels einer nicht dargestellten Vakuumpumpe, so dass es sich um ein Saugkesselfahrzeug handelt. Auch die Zulauföffnung für das Produkt ist nicht explizit in Fig.1 dargestellt. Ferner kann das Fahrzeug 10 auch Einrichtungen zum Spülen von Tanks und/oder Kanälen mit Wasser umfassen, die ebenfalls in Fig. 1 nicht gezeigt sind. Hierbei kann es sich um einen langen Schlauch handeln, der auf der Oberseite des Tankkessels 20 aufrollbar ist. Dieser Schlauch steht in Verbindung mit einer Hochdruckpumpe 12, die wiederum an einen Wassertank 11 angeschlossen ist, um so Wasser unter hohem Druck durch den Schlauch zu fördern. Der Schlauch kann dann entrollt und beispielsweise in einen Kanal gehalten werden, um diesen zu durchspülen und so Feststoffe und/oder anhaftende Stoffe lösen zu können. In diesem Fall handelt es sich um ein Saug-Druck-Kesselfahrzeug.

An die gleiche Hochdruckpumpe 12 kann ein Tankwaschkopf 30 angeschlossen sein, der so in die Wandung des Tankkessels 20 eingebracht ist, das eine Spülflüssigkeit wie Wasser unter Druck über eine Zuleitung 13 in den Tankkessel 20 einbringbar ist. Der Tankwaschkopf 30 kann aber auch an eine separate Pumpe angeschlossen sein. Vorzugsweise ist wenigstens ein solcher Tankwaschkopf 30 vorgesehen, es können aber auch mehrere Tankwaschköpfe in dem Tankkessel 20 installiert sein. Ferner ist der Tankwaschkopf 30 vorzugsweise an der Oberseite des Tankkessels 20 installiert, so dass Wasser von oben in den Innenraum des Tankkessels 20 eingebracht wird. Dabei hat sich eine Anbringung etwa in der Mitte des Kessels als zweckmäßig erwiesen, um den Tankkessel 20 vollständig besprühen zu können. Ein oder mehrere Tankwaschköpfe könnten jedoch beispielsweise auch an den Seiten oder am vorderen oder hinteren Ende des Tankkessels 20 installiert werden. Der Tankwaschkopf 30 ist dabei fest in den Tankkessel 20 installiert, wobei diese Installation lösbar oder unlösbar ausgeführt sein kann.

Das Fahrzeug 10 umfasst in diesem Ausführungsbeispiel ferner einen Kompressor 40, mit dem Außenluft unter Druck in den Tankkessel 20 einbringbar ist. Hierdurch können Drücke in der Größenordnung von beispielsweise 2-2,5 bar aufgebracht werden. Die Verbindung zwischen Kompressor 40 und Tankkessel 20 kann auch hier lösbar oder unlösbar ausgeführt sein, der Kompressor 40 ist jedoch vorzugsweise fest an einer Stelle installiert und ist wie der Tankwaschkopf 30 ein fester Bestandteil des Tankkesselfahrzeugs 10.

Im Ausführungsbeispiel der Fig. 1 ist der Kompressor 40 auf der Oberseite des Tankkessels 20 montiert, und zwar vorzugsweise im in Fahrtrichtung gesehen vorderen Bereich, wenn sich der Auslass 21 im hinteren Bereich befindet. Zweckmäßigerweise tritt durch den Kompressor 40 Luft auf einer Höhe in den Kessel 20 ein, die oberhalb des Produkts 50 liegt. Der Kompressor 40 könnte somit beispielsweise auch im oberen Bereich der Vorderwand des Kessels 20 installiert sein.

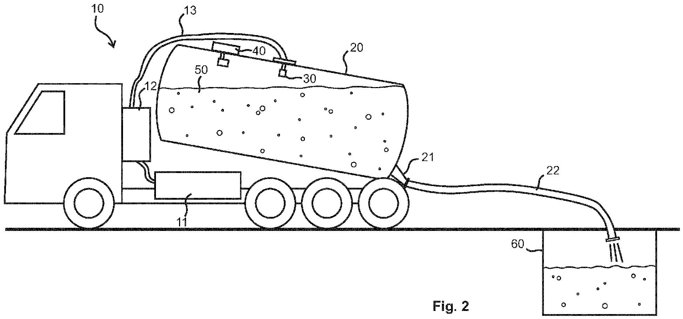

Vorzugsweise ist der Tankkessel 20 in Bezug zum Fahrzeug 10 kippbar ausgeführt, wie es der Fig. 2 zu entnehmen ist. Hierdurch kann ein aufgenommenes Produkt 50 über eine geöffnete Luke oder den Auslassstutzen 21 abgelassen werden. Dabei erfolgt das Ablassen ausschließlich über die Wirkung der Schwerkraft oder der Kompressor 40 wird zusätzlich zugeschaltet, um das Produkt 50 durch den Auslass 21 zu drücken.

An den Auslassstutzen 21 kann ein Ablassschlauch 22 angeschlossen werden, um das Produkt 50 ohne Verschmutzungen durch Spritzer beispielsweise in einen Lagertank 60 im Boden abzulassen. Dieser Lagertank 60 kann sich direkt in der Nähe des Fahrzeugs 10 befinden oder etwas weiter entfernt von diesem angeordnet sein. Das Fahrzeug 10 muss somit nicht direkt bis zum Lagertank 60 gefahren werden, sondern mit dem Schlauch 22 können Entfernungen in der Größenordnung von beispielsweise bis zu 30m gut überbrückt werden. Hierdurch verringern sich auch die Geruchsemissionen im Umfeld des Fahrzeugs 10.

Nach Ablassen des Produktes 50 über den Auslass 21 kann der Tankwaschkopf 30 in Betrieb genommen werden, um den Innenraum des Kessels 20 von Rückständen des Produktes 50 zu befreien. Das Wasser mit den Produktresten kann ebenfalls über den Auslass 21 in den Lagertank 60 oder in einen anderen Behälter abgelassen werden.

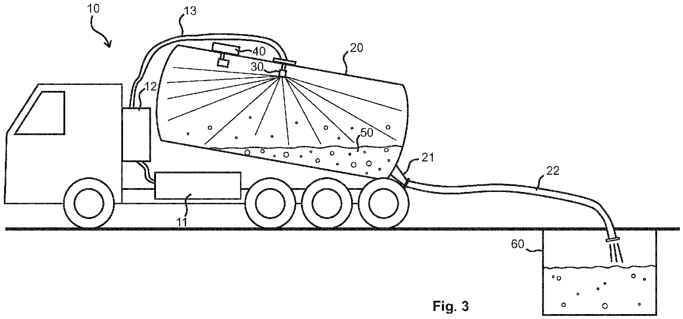

Der Tankwaschkopf 30 kann jedoch auch vorteilhaft dazu eingesetzt werden, um bereits den Entleerungsvorgang zu unterstützen. Dies ist in der Fig. 3 dargestellt, welche das Tankkesselfahrzeug 10 mit gekipptem Tankkessel 20 und gleichzeitigem Einsatz eines Tankwaschkopfes 30 zeigt. Im Tankkessel 20 befindet sich das Produkt 50, wobei bereits ein großer Teil davon abgelassen wurde, so dass sich nur noch die Reste auf dem Boden und vor dem Auslass 21 gesammelt haben. Beispielsweise können in diesen Resten viele Feststoffe und Verklumpungen von Feststoffen enthalten sein. Wird in diesem Stadium des Entleerungsvorgangs der Tankwaschkopf 30 zugeschaltet, wird das Produkt 50 dadurch aufgewirbelt, mit Wasser durchmischt, Feststoffe kommen in Bewegung und Verklumpungen werden möglicherweise sogar zerkleinert. Auf diese Weise können die Produktreste optional auch unter Betrieb des Kompressors 40 schnell durch den Auslass gedrückt werden, ohne dass es vor dem Auslass 21 beispielsweise zu Verstopfungen kommt.

Der Tankwaschkopf 30 kann jedoch auch schon in einem früheren Stadium des Entleerungsvorgangs eingesetzt werden, um ihn auf die gleiche Weise zu unterstützen. Beispielsweise können der Tankwaschkopf 30 und optional auch der Kompressor 40 bereits zugeschaltet werden, sobald der Tankkessel 20 gekippt wird oder gekippt wurde. Auch dies bewirkt eine Aufwirbelung, Verdünnung und Bewegung des zu entleerenden Produktes 50, die sich vorteilhaft auf den Entleerungsvorgang auswirkt. So können insbesondere Verstopfungen des Auslasses 21 verhindert und der Entleerungsvorgang beschleunigt werden.

Damit der Tankwaschkopf 30 diese Aufgaben erfüllen kann, ist er als Rotationswaschkopf ausgeführt. Ein oder mehrere Düsen rotieren somit, um mit Wasserstrahlen unter Druck möglichst alle Innenflächen des Kessels 20 erreichen zu können. Vorzugsweise handelt es sich dabei um einen selbst-drehenden Rotationswaschkopf, der vorteilhafterweise ohne Schmiermittel auskommt und oftmals in der Behälterreinigung im Chemie-, Pharmazie- und Chemiebereich eingesetzt wird. Das Material des Tankwaschkopfes 30 ist so gewählt, dass er den aufzunehmenden Produkten dauerhaft ausgesetzt werden kann. Als zweckmäßig hat sich daher Edelstahl erwiesen.

Mit einem solchen Tankwaschkopf lassen sich je nach Ausführung hohe Durchflussmengen erreichen, wobei beispielsweise eine Durchflussmenge von bis 80 l/min eingesetzt werden kann. Die Spülflüssigkeit in Form von Wasser kann aus dem mitgeführten Tank 11 des Fahrzeugs 10 entnommen werden, oder der Tankwaschkopf 30 bzw. die Hochdruckpumpe 12 werden an einen lokal vorhandenen Wasserspeicher angeschlossen. Der Arbeitsdruck kann bei 300-400 bar liegen.

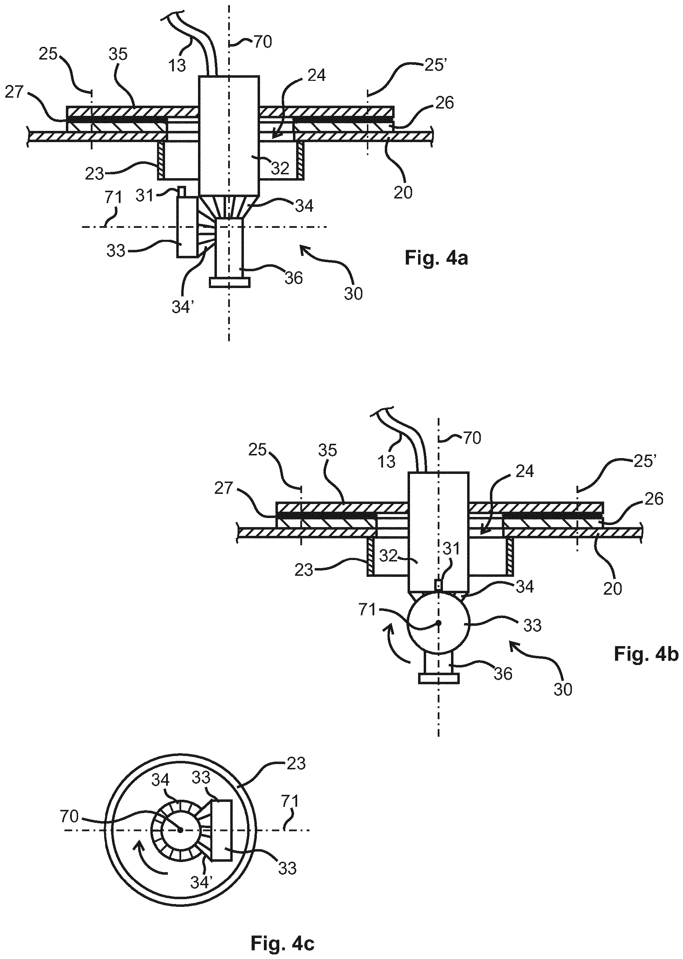

Fig. 4a zeigt eine erste schematische Seitenansicht eines Ausführungsbeispiels eines Tankwaschkopfes 30 an der Innenwandung des Tankkessels 20. Die Wandung weist in diesem Bereich eine Öffnung 24 auf, in welcher der Tankwaschkopf 30 montiert ist. Dazu kann er beispielsweise einen Flansch 35 aufweisen, der wiederum über mehrere Verbindungselemente 25, 25' an einem Flansch 26 des Tankkessels 20 befestigt ist. Bei den Verbindungselementen 25, 25' kann es sich beispielsweise um Schrauben handeln. Zwischen den beiden Flanschen 26, 35 ist vorzugsweise eine Dichtung 27 vorgesehen.

Der Tankwaschkopf 30 ragt senkrecht in den Innenraum des Kessels 20 hinein und weist beispielsweise einen fest stehenden Hauptkörper 32 und einen drehbaren Düsenkörper 33 auf, der wiederum an einem gegenüber dem Hauptkörper 32 drehbaren Zwischenkörper 36 angebracht ist. Der Düsenkörper 33 kann so um zwei Achsen rotieren, wobei zwei Kegelritzel 34 und 34' ineinander greifen, damit sich der Düsenkörper 33 um eine vertikale Rotationsachse 70 und eine horizontale Rotationsachse 71 drehen kann. Beispielsweise am äußeren Rand des Düsenkörpers 33 ist wenigstens eine Düse 31 angebracht, durch welche Spülflüssigkeit unter Druck durch den Tankwaschkopf 30 aus der Düse 31 austritt. Es können jedoch auch mehrere Düsen an dem Düsenkörper 33 vorgesehen werden, die auch in andere Richtungen strahlen können. Auch ist der gesamte Aufbau des Tankwaschkopfes 30 nur beispielhaft zu sehen und kann auch auf andere Arten realisiert werden.

Fig. 4b zeigt den Tankwaschkopf 30 in einer zweiten Seitenansicht, wobei die Rotation des Düsenkörpers 33 und damit der Düse 31 um eine horizontale Achse 71 ersichtlich ist, während Fig. 4c eine Ansicht von unten auf den Tankwaschkopf wiedergibt, aus der die Rotation des Düsenkörpers 33 um eine vertikale Achse 70 hervorgeht.

Der Tankwaschkopf 30 ragt vorzugsweise soweit in den Tankkessel 20 hinein, dass er bei vollem Kessel nicht in das aufgenommene Produkt eintaucht. Somit hat er zweckmäßigerweise nur wenig direkten Kontakt mit dem Produkt. Teile des Produktes können jedoch sehr wohl mit dem Tankwaschkopf 30 in Berührung kommen, wenn das Produkt unter Druck in den Kessel 20 eingebracht wird und beispielsweise Spritzer bis zum Tankwaschkopf 30 gelangen. Beim Betrieb des Tankwaschkopfes 30 wird das Produkt 50 ferner aufgewirbelt und auch so können Teile des Produktes am Tankwaschkopf 30 haften bleiben.

Um insbesondere Lagerschäden oder sonstige Schäden am Tankwaschkopf durch Kontakt mit dem jeweiligen Produkt zu verhindern, ist im Umfeld des Tankwaschkopfes 30 wenigstens ein Reflektorelement 23 vorgesehen sein, welches die Spülflüssigkeit so lenkt, dass sie den Tankwaschkopf 30 umspült und Produktreste fortlaufend abspült. Im Ausführungsbeispiel der Figuren 4a-4c wird dieses Reflektorelement 23 durch einen umlaufenden, kreisrunden Kragen gebildet, der an der Wandung des Tankkessels 20 angebracht ist. Der Tankwaschkopf 30 ist innerhalb dieses Kragens angeordnet, wie es insbesondere auch der Ansicht der Fig. 4c zu entnehmen ist. Der Durchmesser des Kragens liegt dabei unter Verwendung üblicher Tankwaschköpfe in der Größenordnung von beispielsweise 150-200mm. Die Höhe des Kragens liegt dagegen bei etwa 30-150mm, wobei sich eine Höhe von etwa 50-100mm als zweckmäßig erwiesen hat.

Der Innendurchmesser des Kragens ist dagegen so gewählt, dass der Strahl der Düse 31 wenigstens temporär genau zwischen dem Tankwaschkopf 30 und dem Kragen hindurchtritt. Im Ausführungsbeispiel der Figuren 4a-4c sprüht die Düse bei ihrer Drehung um die vertikale Achse 70 somit stets in den Zwischenraum zwischen Tankwaschkopf 30 und Kragen, wenn sie aufgrund ihrer Drehung um die horizontale Achse 71 nach oben in Richtung des Flansches 26 sprüht. Sind am Düsenkörper 33 mehrere Düsen angebracht, strahlt immer wieder eine der Düsen in diesen Zwischenraum. Das Wasser wird an dem Flansch 35 so reflektiert, verteilt und zerstäubt, dass es am Tankwaschkopf 30 und auf der Innenseite des Kragens nach unten läuft. Dabei umspült es den Tankwaschkopf 30, so dass dieser kontinuierlich von Produktresten gereinigt wird und am Ende eines Entleerungs- und/oder Reinigungsvorgangs frei von diesen ist.

Der Innenradius des Kragens ist dabei vorzugsweise so gewählt, dass Wasser, welches an der Innenseite des Kragens herabläuft, nicht vollständig an den darunter befindlichen Komponenten des Tankwaschkopfes 30 vorbeitropft, sondern auf diese auftrifft, so dass eine Spülwirkung eintreten kann. Der Innenradius sollte daher nicht zu groß gewählt werden. Die Höhe des Kragens ist vorzugsweise so zu wählen, dass sich die rotierenden Teile des Tankwaschkopfes 30 und insbesondere die Düse(n) soweit unterhalb der Unterkante des Kragens befinden, dass der Kragen nicht die Reinigung des Kessels 20 beeinträchtigt. Das unter hohem Druck austretende Wasser muss daher die Innenwände des Tankkessels 20 immer noch in einem ausreichenden Maß spülen können, und nur ein möglichst kleiner Teil des Wassers sollte in den Zwischenraum zwischen Tankwaschkopf 30 und Kragen eintreten.

Dabei kann es vorteilhaft sein, innerhalb des Kragens weitere Reflektorelemente 23 wie beispielsweise Platten, Lamellen, Streben, etc. anzubringen. Beispielsweise könnten Elemente angebracht sein, welche das Wasser noch mehr nach innen in Richtung des Tankwaschkopfes 30 ablenken, damit das Wasser verstärkt am Tankwaschkopf 30 herabläuft und weniger am Kragen. Ferner könnte es auch ausreichen, wenn der Kragen unterbrochen ist, so dass Wasser an manchen Stelle zur Seite austreten kann. Auch Abweichungen von der kreisrunden Form des Kragens sind möglich oder der Kragen ist beispielsweise eher trichterförmig ausgeführt.

Ferner muss ein Reflektorelement 23 wie der Kragen auch kein separates Bauteil sein, das beispielsweise über eine Schweißverbindung mit der Wandung des Tankkessels 20 verbunden ist, sondern das Reflektorelement 23 kann auch einstückig innerhalb der Wandung ausgeformt sein. Darüber hinaus kann das Reflektorelement 23 auch am Tankwaschkopf 30 selbst, am Flansch 35 des Tankwaschkopfes 30 oder am Flansch 26 des Tankkessels 20 ausgeformt sein.

### Bezugszeichenliste

- 10: Tankkesselfahrzeug, Saug-Druck-Tankkesselfahrzeug
- 11: Wassertank
- 12: Hochdruckpumpe
- 13: Zuleitung für Spülflüssigkeit
- 20: Tankkessel
- 21: Auslass, Ablassstutzen
- 22: Ablassschlauch
- 23: Reflektorelement
- 24: Öffnung in Wandung
- 25,25': Verbindungselement, Schraube
- 26: Flansch an Tankkesselwandung
- 27: Dichtung
- 30: Tankwaschkopf
- 31: Düse
- 32: Hauptkörper
- 33: Düsenkörper
- 34,34': Kegelritzel
- 35: Flansch an Tankwaschkopf
- 36: Zwischenkörper
- 40: Kompressor
- 50: Produkt, Flüssigkeit, Schlamm
- 60: Lagertank
- 70: Vertikale Rotationsachse
- 71: Horizontale Rotationsachse

## Patentansprüche

1. Tankkesselfahrzeug (10), umfassend einen Tankkessel (20), welcher wenigstens einen Auslass (21) zum Entleeren eines Produktes (50) aus dem Tankkessel (20) aufweist, und wenigstens einen Tankwaschkopf (30), der im Tankkessel (20) installiert ist und über den eine Spülflüssigkeit unter Druck in den Tankkessel (20) einbringbar ist, wobei der Tankwaschkopf (30) ein Rotationswaschkopf ist, **dadurch gekennzeichnet, dass** im Umfeld des Tankwaschkopfes (30) wenigstens ein Reflektorelement (23) zur Beeinflussung der Ausbreitung der aus dem Tankwaschkopf (30) austretenden Spülflüssigkeit ausgebildet ist, und dass das Reflektorelement (23) die Spülflüssigkeit so leitet, dass die Spülflüssigkeit zumindest teilweise auch den Tankwaschkopf (30) umspült.

2. Tankkesselfahrzeug nach Anspruch 1,
**dadurch gekennzeichnet, dass** der Tankwaschkopf (30) ein selbst-drehender Rotationswaschkopf ist.

3. Tankkesselfahrzeug nach einem oder beiden der Ansprüche 1 und 2,
**dadurch gekennzeichnet, dass** der Tankkessel (20) kippbar auf dem Tankkesselfahrzeug (10) angebracht ist.

4. Tankkesselfahrzeug nach einem oder mehreren der Ansprüche 1 bis 3,
**dadurch gekennzeichnet, dass** der Tankwaschkopf (30) an der Oberseite des Tankkessels (20) in dessen Wandung integriert ist.

5. Tankkesselfahrzeug nach einem oder mehreren der Ansprüche 1 bis 4, **dadurch gekennzeichnet, dass** das Reflektorelement (23) als ein Kragen ausgebildet ist, dass der Kragen so um den Tankwaschkopf (30) herum angeordnet ist, dass ein von dem Tankwaschkopf (30) ausgehender Strahl an Spülflüssigkeit wenigstens temporär zwischen Tankwaschkopf (30) und dem Kragen hindurchtritt.

6. Tankkesselfahrzeug nach einem oder mehreren der Ansprüche 1 bis 5, **dadurch gekennzeichnet, dass** es Mittel (40) zum Entleeren eines Produktes (50) aus dem Tankkessel (20) über den Auslass (21) unter Druck aufweist.

7. Tankkesselfahrzeug nach Anspruch 6, **dadurch gekennzeichnet, dass** es einen Kompressor (40) aufweist, über den Luft unter Druck in den Tankkessel (20) einbringbar ist.

8. Verfahren zum Entleeren des Tankkessels (20) eines Tankkesselfahrzeugs (10), wobei bei dem Entleerungsvorgang ein zuvor in den Tankkessel (20) aufgenommenes Produkt (50) über wenigstens einen Auslass (21) aus dem Tankwobei während des Entleerungsvorgangs wenigstens temporär eine Spülflüssigkeit über einen Tankwaschkopf (30) unter Druck in den Tankkessel (20) eingebracht wird, wobei als Tankwaschkopf (30) ein Rotationswaschkopf verwendet wird, **dadurch gekennzeichnet, dass** im Umfeld des Tankwaschkopfes (30) wenigstens ein Reflektorelement (23) zur Beeinflussung der Ausbreitung der aus dem Tankwaschkopf (30) austretenden Spülflüssigkeit ausgebildet wird, und dass das Reflektorelement (23) die Spülflüssigkeit so leitet, dass die Spülflüssigkeit zumindest teilweise auch den Tankwaschkopf (30) umspült.

9. Verfahren nach Anspruch 8, **dadurch gekennzeichnet, dass** ein Tankkesselfahrzeug (10) mit einem im Tankkessel (20) installierten Tankwaschkopf (30) nach einem oder mehreren der Ansprüche 1 bis 8 eingesetzt wird.

10. Verfahren nach einem oder beiden der Ansprüche 8 und 9, **dadurch gekennzeichnet, dass** die Spülflüssigkeit erst nach Ablassen einer ersten Menge des Produktes (50) über den Tankwaschkopf (30) in den Tankkessel (20) eingebracht wird.

11. Verfahren nach einem oder mehreren der Ansprüche 8 bis 10, **dadurch gekennzeichnet, dass** der Tankkessel (20) für den Entleerungsvorgang wenigstens temporär gegenüber dem Tankkesselfahrzeug (10) gekippt wird.

12. Verfahren nach einem oder mehreren der Ansprüche 8 bis 11, **dadurch gekennzeichnet, dass** beim Entleerungsvorgang wenigstens temporär Mittel (40) eingesetzt werden, mit denen das Produkt (50) unter Druck aus dem Tankkessel (20) durch den Auslass (21) gedrückt wird.

13. nach einem oder mehreren der Ansprüche 8 bis 12, **dadurch gekennzeichnet, dass** der Tankkessel (20) beim Entleerungsvorgang gegenüber dem Tankkesselfahrzeug (10) gekippt wird, während gleichzeitig Spülflüssigkeit unter Druck über den Tankwaschkopf (30) in den Tankkessel (20) eingebracht und Mittel (40) eingesetzt werden, mit denen das Produkt (50) unter Druck über den Auslass (21) aus dem Tankkessel (20) entleert wird.

14. Verfahren nach einem oder mehreren der Ansprüche 8 bis 12, **dadurch gekennzeichnet, dass** der Tankkessel (20) beim Entleerungsvorgang gegenüber dem Tankkesselfahrzeug (10) gekippt wird, während gleichzeitig Mittel (40) eingesetzt werden, mit denen das Produkt (50) unter Druck über den Auslass (21) aus dem Tankkessel (20) entleert wird, und dass erst ab einem bestimmten Zeitpunkt während des Entleerungsvorgangs zusätzlich Spülflüssigkeit unter Druck über den Tankwaschkopf (30) in den Tankkessel (20) eingebracht wird.

## Claims

1. A tanker vehicle (10), comprising a tank (20) having at least one outlet (21) for emptying a product (50) from the tank (20), and at least one tank washing head (30), which is installed in the tank (20) and via which a flushing liquid can be introduced under pressure into the tank (20), wherein the tank washing head (30) is a rotary washing head, **characterized in that** at least one reflector member (23) for influencing the distribution of the flushing liquid exiting the tank washing head (30) is formed in the vicinity of the tank washing head (30), and that the reflector member (23) guides the flushing liquid in such a manner that the flushing liquid at least partially also washes around the tank washing head (30).

2. The tanker vehicle according to claim 1,
**characterized in that** the tank washing head (30) is an auto-revolving rotary washing head.

3. The tanker vehicle according to any one or both of the claims 1 and 2,
**characterized in that** the tank (20) is mounted in a tiltable manner on the tanker vehicle (10).

4. The tanker vehicle according to any one or several of the claims 1 to 3,
**characterized in that** the tank washing head (30) is integrated, at the top side of the tank (20), into the wall of the latter.

5. The tanker vehicle according to any one or several of the claims 1 to 4,
**characterized in that** the reflector member (23) is configured as a collar, that the collar is disposed around the tank washing head (30) in such a way that a flushing liquid jet emanating from the tank washing head (30) at least temporarily passes between the tank washing head (30) and the collar.

6. The tanker vehicle according to any one or several of the claims 1 to 5, **characterized in that** it has means (40) for emptying a product (50) from the tank (20) via the outlet (21) under pressure.

7. The tanker vehicle according to claim 6,
**characterized in that** it has a compressor (40) via which air can be introduced under pressure into the tank (20).

8. A method for emptying the tank (20) of a tanker vehicle (10), wherein a product (50) previously received in the tank (20) is emptied from the tank (20) via at least one outlet (21) during the emptying process,
wherein a flushing liquid is at least temporarily introduced into the tank (20) under pressure via a tank washing head (30) during the emptying process, wherein a rotary washing head is used as a tank washing head (30), **characterized in that**
at least one reflector member (23) for influencing the distribution of the flushing liquid exiting the tank washing head (30) is formed in the vicinity of the tank washing head (30),
and that the reflector member (23) guides the flushing liquid in such a manner that the flushing liquid at least partially also washes around the tank washing head (30).

9. The method according to claim 8,
**characterized in that** a tanker vehicle (10) with a tank washing head (30) installed in the tank (20) according to any one of the claims 1 to 8 is used.

10. The method according to any one or both of the claims 8 and 9,
**characterized in that** the flushing liquid is introduced into the tank (20) via the tank washing head (30) only after a first amount of the product (50) has been discharged.

11. The method according to any one or several of the claims 8 to 10, **characterized in that** the tank (20) is tilted at least temporarily relative to the tanker vehicle (10) for the emptying process.

12. The method according to any one or several of the claims 8 to 11,
**characterized in that** means (40) are used at least temporarily in the emptying process, with which the product (50) is pressed out of the tank (20) through the outlet (21) under pressure.

13. The method according to any one or several of the claims 8 to 12,
**characterized in that** the tank (20) is tilted relative to the tanker vehicle (10) during the emptying process while at the same time, flushing liquid is introduced under pressure into the tank (20) via the tank washing head (30) and means (40) are used with which the product (50) is emptied out of the tank (20) via the outlet (21) under pressure.

14. The method according to any one or several of the claims 8 to 12,
**characterized in that** the tank (20) is tilted relative to the tanker vehicle (10) during the emptying process, while at the same time, means (40) are used with which the product (50) is emptied out of the tank (20) via the outlet (21) under pressure, and that flushing liquid is additionally introduced into the tank (20) under pressure via the tank washing head (30) only from a certain point in time during the emptying process.

## Revendications

1. Véhicule-citerne (10) comprenant une citerne (20) qui présente au moins une sortie (21) d'évacuation d'un produit (50) de ladite citerne (20), ainsi qu'au moins une tête de lavage de citerne (30) qui est installée à l'intérieur de la citerne (20) et par le biais de laquelle un liquide de rinçage peut être introduit sous pression dans la citerne (20), dans lequel ladite tête de lavage de citerne (30) est une tête de lavage de rotation, **caractérisé par le fait qu'**au moins un élément réflecteur (23) destiné à influer sur la propagation du liquide de rinçage sortant de la tête de lavage de citerne (30) est réalisé dans les environs de la tête de lavage de citerne (30), et que l'élément réflecteur (23) dirige le liquide de rinçage de telle manière que le liquide de rinçage s'écoule au moins en partie également autour de la tête de lavage de citerne (30).

2. Véhicule-citerne selon la revendication 1,
**caractérisé par le fait que** ladite tête de lavage de citerne (30) est une tête de lavage de rotation auto-rotative.

3. Véhicule-citerne selon l'une ou les deux des revendications 1 et 2,
**caractérisé par le fait que** la citerne (20) est montée sur le véhicule-citerne (10) de manière à pouvoir être basculée.

4. Véhicule-citerne selon l'une ou plusieurs des revendications 1 à 3,
**caractérisé par le fait que** ladite tête de lavage de citerne (30) est intégrée sur la face supérieure de la citerne (20) à la paroi de celle-ci.

5. Véhicule-citerne selon l'une ou plusieurs des revendications 1 à 4,
**caractérisé par le fait que** l'élément réflecteur (23) est réalisé en tant que collerette, que ladite collerette est agencée autour de la tête de lavage de citerne (30) de telle sorte qu'un jet de liquide de rinçage provenant de la tête de lavage de citerne (30) passe au moins temporairement entre la tête de lavage de citerne (30) et la collerette.

6. Véhicule-citerne selon l'une ou plusieurs des revendications 1 à 5,
**caractérisé par le fait qu'**il comprend des moyens (40) pour faire évacuer sous pression, via la sortie (21), un produit (50) de la citerne (20).

7. Véhicule-citerne selon la revendication 6,
**caractérisé par le fait qu'**il comprend un compresseur (40) au moyen duquel de l'air peut être introduit sous pression dans la citerne (20).

8. Procédé de vidange de la citerne (20) d'un véhicule-citerne (10), dans lequel, lors de l'opération de vidange, un produit (50) reçu auparavant à l'intérieur de la citerne (20) est évacué via au moins une sortie (21) de la citerne (20), dans lequel, durant l'opération de vidange, un liquide de rinçage est introduit sous pression au moins temporairement par l'intermédiaire d'une tête de lavage de citerne (30) dans la citerne (20), dans lequel on utilise une tête de lavage de rotation en tant que tête de lavage de citerne (30), **caractérisé par le fait qu'**au moins un élément réflecteur (23) destiné à influer sur la propagation du liquide de rinçage sortant de la tête de lavage de citerne (30) est réalisé dans les environs de la tête de lavage de citerne (30), et que l'élément réflecteur (23) dirige le liquide de rinçage de telle manière que le liquide de rinçage s'écoule au moins en partie également autour de la tête de lavage de citerne (30).

9. Procédé selon la revendication 8,
**caractérisé par le fait que** l'on utilise un véhicule-citerne (10) comprenant une tête de lavage de citerne (30) installée à l'intérieur de la citerne (20) selon l'une ou plusieurs des revendications 1 à 8.

10. Procédé selon l'une ou les deux des revendications 8 et 9,
**caractérisé par le fait que** le liquide de rinçage n'est introduit par l'intermédiaire de la tête de lavage de citerne (30) dans la citerne (20) qu'après avoir évacué une première quantité du produit (50).

11. Procédé selon l'une ou plusieurs des revendications 8 à 10,
**caractérisé par le fait que**, pour l'opération de vidange, la citerne (20) est basculée au moins temporairement par rapport au véhicule-citerne (10).

12. Procédé selon l'une ou plusieurs des revendications 8 à 11,
**caractérisé par le fait que**, lors de l'opération de vidange, on utilise au moins temporairement des moyens (40) par l'intermédiaire desquels le produit (50) est pressé sous pression via la sortie (21) hors de la citerne (20).

13. Procédé selon l'une ou plusieurs des revendications 8 à 12,
**caractérisé par le fait que**, lors de l'opération de vidange, la citerne (20) est basculée par rapport au véhicule-citerne (10), tandis que, en même temps, du liquide de rinçage est introduit sous pression au moyen de la tête de lavage de citerne (30) dans la citerne (20) et des moyens (40) sont utilisés par l'intermédiaire desquels le produit (50) est évacué sous pression, via la sortie (21), de la citerne (20).

14. Procédé selon l'une ou plusieurs des revendications 8 à 12,
**caractérisé par le fait que**, lors de l'opération de vidange, la citerne (20) est basculée par rapport au véhicule-citerne (10), tandis que, en même temps, des moyens (40) sont utilisés par l'intermédiaire desquels le produit (50) est évacué sous pression, via la sortie (21), de la citerne (20), et que ce n'est qu'à partir d'un certain moment durant l'opération de vidange que, en sus, du liquide de rinçage est introduit sous pression via la tête de lavage de citerne (30) dans la citerne (20).
